# EUROPEAN PATENT APPLICATION

(11) **EP 3 699 760 A1**
(43) Date of publication of application: **26.08.2020**
(21) Application number: 18894605.7
(22) Date of filing: 22.11.2018
(51) Int. Cl.: G06F 9/48

(54) **INFORMATION PROCESSING METHOD AND DEVICE, COMPUTER DEVICE AND COMPUTER READABLE STORAGE MEDIUM**

(30) Priority: 29.12.2017 CN 201711488930
(71) Applicant: GUANGDONG OPPO MOBILE TELECOMMUNICATIONS CORP., LTD., Wusha, Chang'an Dongguan, Guangdong 523860 (CN)
(72) Inventor: FANG, Pan, Dongguan, Guangdong 523860 (CN); CHEN, Yan, Dongguan, Guangdong 523860 (CN)
(74) Representative: Penza, Giancarlo
(86) International application number: PCT/CN2018/117024
(87) International publication number: WO 2019/128574

(57) **Abstract**

An information processing method, comprising: acquiring a user group corresponding to a to-be-processed progress, the to-be-processed progress is a to-be-frozen progress or a to-be-unfrozen progress; searching for a plurality of progresses corresponding to the user group according to a mapping relation of the user group to the progresses; and freezing or unfreezing the plurality of progresses corresponding to the user group.

## Description

### Cross-Reference to Related Applications

This application claims priority to Chinese Patent Application No. 201711488930.6, filed on December 29, 2017 and entitled "Information Processing Method and Device, Computer Device and Computer Readable Storage Medium", the entire disclosure of which is hereby incorporated by reference.

### Technical Field

The present application relates to the field of computer technologies, in particular to a method for processing information, an apparatus, a computer device, and a computer readable storage medium.

### Background

With a rapid development of an intelligent computer device, applications that may run on the intelligent computer device are becoming more diverse. When multiple application programs are running in foreground or background of an intelligent computer device, the application programs will preempt system resources from each other, such as CPU resources, I/O resources, and network resources. Preemption of system resources among applications usually results in slow running of the intelligent computer device.

### Summary

Embodiments of the present application provide a method for processing information, an apparatus, a computer device, and a computer readable storage medium.

A method for processing information, including: acquiring a user group corresponding to a process to be processed, wherein the process to be processed is a process to be frozen or a process to be unfrozen; searching for multiple processes corresponding to the user group according to a mapping relationship of user groups to processes; and freezing or unfreezing the multiple processes corresponding to the user group.

An apparatus for processing information, including: an acquisition module, configured to acquire a user group corresponding to a process to be processed, wherein the process to be processed is a process to be frozen or a process to be unfrozen; a searching module, configured to search for multiple processes corresponding to the user group according to a mapping relationship of user groups to processes; and a processing module, configured to freeze or unfreeze the multiple processes corresponding to the user group.

A computer device, including a memory and a processor, wherein a computer program is stored in the memory, and when the computer program is executed by the processor, the computer program enables the processor to perform the operations of the method as described above.

A computer readable storage medium having a computer program stored thereon, wherein when the computer program is executable by a processor, the computer program implements the operations of the method as described above.

In an embodiment of the present application, after acquiring a user group of a process to be processed, multiple processes corresponding to the user group, that is, multiple processes corresponding to a same application program, may be directly acquired. Compared with a mode of acquiring a process corresponding to a user group by an upper traversal, the method for processing information, the apparatus, the computer device, and the computer readable storage medium greatly save time for searching for a process corresponding to a user group, improve an efficiency of searching for the process corresponding to the user group, and are beneficial for resource management of the process corresponding to the user group more quickly.

### Brief Description of Drawings

To describe technical solutions in embodiments of the present application or the related art more clearly, accompanying drawings that need to be used in the description of embodiments or the related art will be briefly introduced below. It is apparent that the accompanying drawings described below are only some embodiments of the present application; and for a person of ordinary skill in the art, other drawings may be obtained according to these drawings without paying an inventive effort.
FIG. 1 is a schematic diagram of an internal structure of a computer device in one embodiment.
FIG. 2 is a partial architecture diagram of a computer device in one embodiment.
FIG. 3 is a flowchart of a method for processing information in one embodiment.

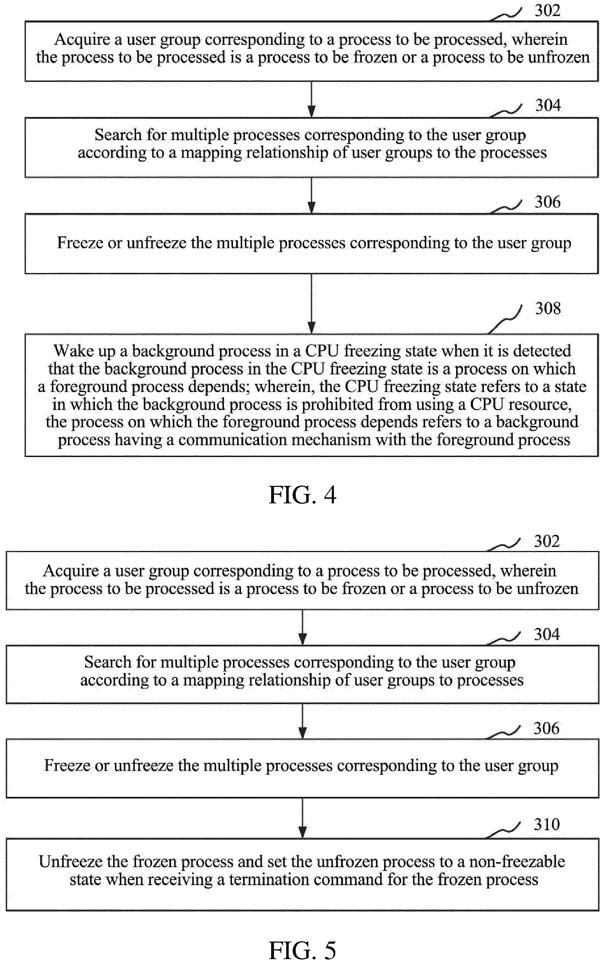

FIG. 4 is a flowchart of a method for processing information in another embodiment.
FIG. 5 is a flowchart of a method for processing information in another embodiment.
FIG. 6 is a flowchart of a method for processing information in another embodiment.
FIG. 7 is a block diagram of an apparatus for processing information in one embodiment.
FIG. 8 is a block diagram of an apparatus for processing information in another embodiment.
FIG. 9 is a block diagram of an apparatus for processing information in another embodiment.
FIG. 10 is a block diagram of an apparatus for processing information in another embodiment.
FIG. 11 shows a block diagram of a partial structure of a mobile phone related to a computer device according to an embodiment of the present application.

### Detailed Description

In order to make objects, technical solutions, and advantages of the present application more clear, the present application will be described in further detail below with reference to drawings and embodiments. It should be understood that embodiments described herein are only for the purpose of explaining the present application and are not intended to limit the present application.

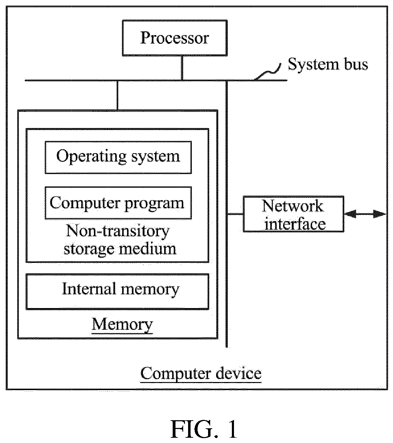

FIG. 1 is a schematic diagram of an internal structure of a computer device 200 in one embodiment. As shown in FIG. 1, the computer device includes a processor, a memory, and a network interface which are connected through a system bus.The processor is used for providing capabilities of computation and control to support an operation of a whole computer device. The memory is used for storing data, programs, etc. The memory stores at least one computer program that is executed by the processor to implement a method for processing information applicable to the computer device provided in an embodiment of the present application. The memory may include a non-transitory storage medium and an internal memory. The non-transitory storage medium stores an operating system and a computer program. The computer program may be executed by the processor for implementing one method for processing information provided in the following embodiments. The internal memory provides a cached operating environment for the operating system and the computer program in non-transitory storage medium. The network interface may be an Ethernet card or a wireless card, etc. for communicating with an external computer device. The computer device may be a mobile phone, a tablet computer, a personal digital assistant, a wearable device, etc.

Those skilled in the art will understand that the structure shown in FIG. 1 is only a block diagram of a part of a structure related to a solution of the present application, but does not constitute restriction for the computer device to which the solution of the present application is applied. A specific computer device may include more or fewer components than those shown in the figure, or combine some components, or have different component arrangements. For example, the computer device also includes a network interface connected through a system bus, and the network interface may be an Ethernet card or a wireless network card for communicating with an external computer device, for example, may be used for communicating with a server.

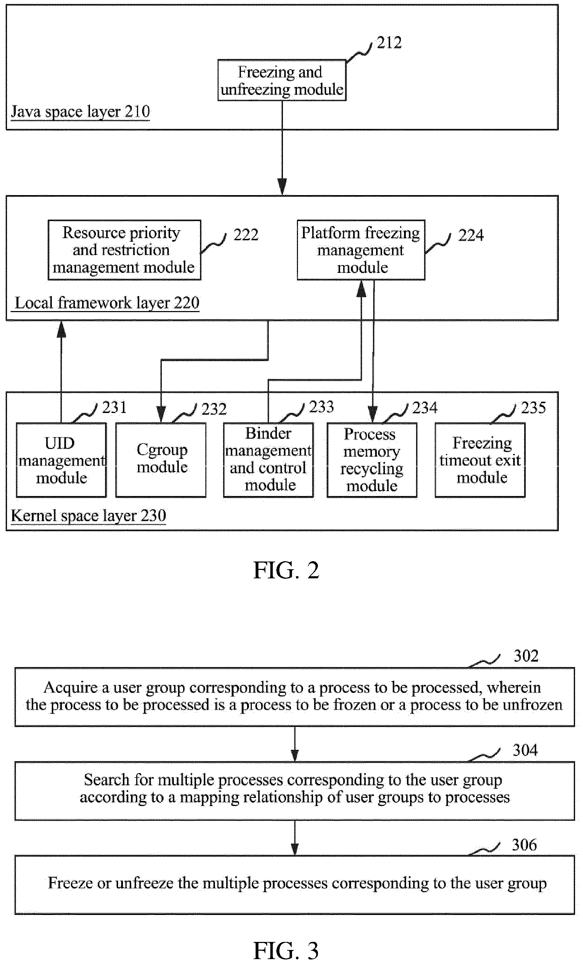

FIG. 2 is a partial architecture diagram of a computer device in one embodiment. As shown in FIG. 2, an architecture system of the computer device includes a Java space layer 210, a local framework layer 220, and a Kernel space layer 230. The Java space layer includes a freezing and unfreezing module 212, which is used for implementing freezing policies for various application programs, such as freezing applications that consume power in background.

The local framework layer 220 includes a resource priority and restriction management module 222 and a platform freezing management module 224. The resource priority and restriction management module 222 may perform different resource restrictions on different application programs to make different application programs be in different resource priorities. The resource priority and restriction management module 222 may also adjust a resource priority of an application program according to a requirement of an upper layer, so that the computer device may reasonably use a resource of the application program. The platform freezing management module 224 may determine a level of resource restriction on an application program of a process according to a length of time the application program has entered background. The platform freezing management module 224 may preset different levels of resource restriction. The longer the application program enters the background, the higher the level of resource restriction on the application program set by the platform freezing management module 224, that is, the higher the degree of resource restriction on the application program. Optionally, the level of resource restriction may include a Central Processing Unit (CPU) restriction sleep mode, a CPU freezing sleep mode, and a process deep freezing mode. The CPU restriction sleep mode refers to preforming a resource restriction on a CPU resource that may be used by a process of an application program so that the process of the application program may use less CPU resources. In the CPU restriction sleep mode, network resources and input/output (I/O) resources available to the process of the application program may be further restricted. The CPU freezing sleep mode refers to prohibiting a process of an application program from using a CPU resource, a network resource, or an I/O resource, but memory resources occupied by the process of the application program are not recycled. The CPU freezing mode is a deep restriction mode on resources available to the application program. The CPU freezing sleep mode refers to prohibiting a process of an application program from using a CPU resource, a network resource, or an I/O resource, while recycling memory resources occupied by the process of the application program. An interface module of the local framework layer 220 includes a binder interface developed to the upper layer. A framework or an application program of the upper layer may send a resource restriction instruction to the resource restriction management module 222 and a freezing instruction to the platform freezing management module 224 through the binder interface.

The Kernel space layer 230 includes a User Identifier (UID) management module 231, a Cgroup module 232, a binder management and control module 233, a process memory recycling module 234, and a timeout freezing exit module 235. Currently, a process management for an application program is implemented based on a Process Identification (PID). A Process does not correspond to an application program, which is not beneficial to manage resources corresponding to all processes of one application program as a whole. The UID management module 231 may manage resources of an application program through a UID of the application program, or may freeze the application program through the UID of the application program. The Cgroup module 232 may provide a resource restriction mechanism based on CPU, CPUSET, memory, I/O resources, and Net. The Binder management and control module 233 may be used for restricting a priority of binder communication among background processes. The process memory recycling module 234 is used for realizing the process deep freezing mode. When a process enters the process deep freezing mode, a file area of the process is released, thereby saving a memory and speeding up a next launch of the application program corresponding to the process. The timeout freezing exit module 235 is used for solving a problem that a process is abnormal during freezing timeout.

Through the above architecture, the method for processing information in various embodiments of the present application may be implemented.

FIG. 3 is a flowchart of a method for processing information in one embodiment. As shown in FIG. 3, a method for processing information includes: in operation 302, acquiring a user group corresponding to a process to be processed, and the process to be processed is a process to be frozen or a process to be unfrozen.

Under normal circumstances, in a mobile operating system, various resources are managed in a unit of process. For example, a CPU resource, a memory resource, a network resource, and an I/O resource, etc. When an application program in a computer device switches between foreground and background, all processes corresponding to the application program will also be scheduled accordingly. When restricting a resource occupied by the application program, all processes corresponding to the application program need to be acquired by upper traversal cpuacct or proc, thus performing resource restriction on all processes corresponding to the application program.

A user group is an attribute of a process. When creating a process, a computer device kernel will assign a user group corresponding to the process. When the process is destroyed, the computer device kernel will release the user group corresponding to the process. In general, user groups of multiple processes corresponding to a same application program are the same.

When a computer device receives a freezing instruction or an unfreezing instruction of a process, a user group corresponding to the process may be acquired. A mapping relationship of processes to user groups may be preset in the computer device. After acquiring a process to be processed, a user group corresponding to the process to be processed may be searched for in the corresponding relationship of the processes to the user groups. The computer device may acquire the user group corresponding to the process by a traversal query of cpuacct.

In operation 304, multiple processes corresponding to the user group are searched for according to the mapping relationship of the user groups to the processes.

The computer device also pre-stores the mapping relationship of the user groups to the processes, and the mapping relationship of the user groups to the processes is acquired according to a corresponding relationship between the user groups and the processes. Multiple processes corresponding to each user group in the computer device are recorded in the mapping relationship of the user groups to the processes. The computer device may search for multiple processes corresponding to the user group according to the mapping relationship of the user groups to the processes, and the multiple processes corresponding to the user group include the process to be processed. Since a user group is an attribute of a process and user groups of multiple processes corresponding to the same application program are the same, after the computer device acquires a user group corresponding to the process to be processed, then multiple processes corresponding to the user group, that are found out by the computer device, are multiple processes corresponding to the same application program. The computer device may also search for multiple processes corresponding to a user group by a way of traversal acct.

In operation 306, freezing or unfreezing the multiple processes corresponding to the user group.

After acquiring the multiple processes corresponding to the user group, the computer device may freeze or unfreeze the multiple processes corresponding to the user group, that is, the computer device may freeze or unfreeze the multiple processes of the same application program. The step of freezing the multiple processes is to restrict resources occupied by the multiple processes, so as to avoid a problem of slow running of foreground processes due to a preemption of resources by background processes and foreground processes. The step of restricting resources occupied by the multiple processes includes restricting network resources, CPU resources, I/O resources, memory resources, and etc. A mechanism for freezing processes may be set in the computer device, and multiple processes may be frozen according to the mechanism. The step of unfreezing the multiple processes refers to removing a frozen state of the multiple processes, i.e., lifting restrictions on the resources occupied by the multiple processes. Under normal circumstances, when a background application program downloads a file and plays an audio, resources occupied by multiple processes corresponding to the background application program may be unrestricted.

In a normal used mobile operating system, taking an Android system as an example, one application program usually includes multiple processes, while the Android system manages various resources in a unit of process. In resource management of the processes, if only one single process in one application program is frozen, another process in the application program that are not frozen may wake up the frozen process through communication among processes, thus reducing a freezing ratio on background processes. In order to improve the freezing ratio on the background processes, when freezing the background processes, all processes under the same application program need to be frozen.

According to the method in an embodiment of the present application, multiple processes corresponding to a user group, namely the multiple processes corresponding to the same application program, may be directly acquired, after acquiring the user group of a process to be processed. Compared with the method of acquiring processes corresponding to a user group by the upper traversal, the method greatly saves time for searching for processes corresponding to a user group, improves an efficiency of searching for the processes corresponding to the user group, and is beneficial to freezing or unfreezing the processes corresponding to the user group more quickly.

In one embodiment, before acquiring the user group corresponding to the process to be processed, the method further includes following acts.

(1) Acquiring a corresponding relationship between user groups and processes, and generating a mapping relationship of the user groups to the processes according to the corresponding relationship, wherein the mapping relationship of the user groups to the processes is a one-to-many relationship.

In a Linux system, the system may divide itself into two parts, wherein a core software is located in a kernel space and a common software is located in a user space. Codes in the user space have a lower permission to be run, only part of system resources used can be acquired from the user space, while codes in the kernel space have a higher permission to be run and have all permissions to access a computer device.

The computer device may acquire a corresponding relationship between the user groups and the processes in real time in the kernel space, and generate a mapping relationship of user groups to processes and a mapping relationship of processes to user groups according to the corresponding relationship between the user groups and the processes. The mapping relationship of the user groups to the processes is used for recording processes corresponding to all user groups in the computer device, and the mapping relationship of the user groups to the processes is a one-to-many relationship. The mapping relationship of the processes to the user groups is used for recording a user group corresponding to each process in the computer device. Since a user group is an attribute of a process, the mapping relationship of the processes to the user groups is a one-to-one relationship. A user group corresponding to a process may be quickly found through the mapping relationship of the processes to the user groups, and multiple processes corresponding to the user group may be quickly found through the mapping relationship of the user groups to the processes. Normally, one query may be completed at a microsecond level.

(2) If a query request for the mapping relationship of the user groups to the processes is received, a query result corresponding to the query request is acquired according to the mapping relationship of the user groups to the processes, and the query result is returned.

The kernel space of the computer device may provide a synchronous query interface and an asynchronous notification interface for the user space.

When the user space needs to perform resource management on a process to be processed, a user group corresponding to the process to be processed may be searched for in the mapping relationship of the processes to the user groups through the synchronous query interface. After receiving the user group corresponding to the process to be processed returned by the kernel space, the user space may search for multiple processes corresponding to the user group in the mapping relationship of the user groups to the processes through the synchronous query interface, i.e., search for other processes belonging to the same application program as the process to be processed. When the user space receives the multiple processes corresponding to the user group returned by the kernel space, the user space may perform resource management on the multiple processes corresponding to the user group.

When the kernel space detects a change in the corresponding relationship between the user groups and the processes, information of a changed user group and the process may be reported to the user space through the asynchronous notification interface, so that the user space may adjust the resource management on processes in time. For example, when a process is destroyed, the kernel space will release a user group corresponding to the process, and the kernel space may upload information about releasing of the user group corresponding to the process to the user space.

During a whole life cycle of the process, the user group corresponding to the process changes dynamically. Therefore, the kernel space will acquire the corresponding relationship between the user groups and the processes in real time, and update the mapping relationship of the user groups to the processes and the mapping relationship of the processes to the user groups in real time according to the corresponding relationship between the user groups and the processes.

According to the method in an embodiment of the present application, the user group corresponding to the process and multiple processes corresponding to the user group may be quickly searched for, by establishing the mapping relationship of the user groups to the processes and the mapping relationship of the processes to the user groups, thereby accelerating a rate of acquiring the multiple processes corresponding to the user group and being beneficial to quickly manage resources of the multiple processes corresponding to the user group.

In one embodiment, freezing multiple processes corresponding to the user group in operation 306 includes: acquiring lengths of time the multiple processes have entered the background, determining freezing levels for freezing the multiple processes according to the lengths of time, and restricting resources of the multiple processes according to the freezing levels.

The computer device may set multiple freezing levels for the processes, and set the processes to have different freezing levels according to the length of time the processes have entered the background. Wherein, different freezing levels have different restrictions on resources. For example, according to a sequence of the length of time the processes have entered the background from short to long, the processes may be divided into: a CPU restriction sleep mode, a CPU freezing sleep mode, and a process deep freezing mode. The CPU restriction sleep mode refers to restricting a CPU resource available to a process, and correspondingly restricting a network resource and an I/O resource available to the process, for example, restricting CPU resources available to the process to be 10% of the total CPU resources. The CPU freezing sleep mode refers to prohibiting a process from using a CPU resource, and prohibiting the process from using a network resource or an I/O resource accordingly. The process deep freezing mode refers to not only prohibiting a process from using a CPU resource, a network resource, or an I/O resource, but also recycling a memory occupied by the process. By setting different freezing levels for the processes, resources occupied by background processes may be gradually released.

According to the method in an embodiment of the present application, a corresponding freezing level may be set according to a length of time a process has entered background, so that more resources are recycled for a process having entered the background for a long time, less resources are recycled for a process having entered the background for a short time, and intelligent processing of recycling resources on processes is realized.

In one embodiment, freezing or unfreezing multiple processes corresponding to the user group in operation 306 includes following acts.
(1) According to a preset machine learning model, acquiring a freezing moment and an unfreezing moment of a process.
(2) Freezing the process according to the freezing moment and unfreezing the process according to the unfreezing moment.

A machine learning model is a decision-making model based on a machine learning algorithm. Through a training of the machine learning model, the machine learning model may be used to determine the freezing moment and unfreezing moment corresponding to each process according to running characteristics of each process. For example, each running characteristic of a process is input into the decision-making model, and the freezing moment and unfreezing moment of the process are input to train the machine learning model. Through a large amount of learning and training, the machine learning model may construct a corresponding relationship between running characteristics of the process and freezing moments and a corresponding relationship between running characteristics of the process and unfreezing moments. After acquiring a running characteristic of a process in the computer device, a freezing moment and an unfreezing moment of the process may be acquired according to the running characteristic.

The running characteristics of the process may include: a time period during which the process running in the foreground, a date type of the process when running in the foreground (the date type includes working days and rest days), a network type and a network state of the process when running in the foreground (the network type may include a wireless local area network and a cellular data network), a length of time of the process having been frozen in the background, a freezing level of the process having been frozen in the background, a plugging and unplugging state of headphones when the process is running in the foreground, whether the computer device is charging when the process is running in the foreground, an electricity quantity of the computer device when the process is running in the foreground, a type of an application program corresponding to the process, etc.

After the computer device acquires the freezing moment and unfreezing moment of the process according to the running characteristics of the process, the computer device may automatically freeze the process at the freezing moment and unfreeze the process at the unfreezing moment. For example, the computer device acquires running characteristics of a game application A, the freezing time acquired for the application A according to the machine learning model is 8:00 to 12:00,14:00 to 18:00 of working days, and freezing does not performed at other time, then the computer device may acquire freezing moments of processes corresponding to the application A as 8:00 and 14:00 of the working days, and unfreezing moments as 12:00 and 18:00 of the working days. Then the computer device may automatically freeze the processes corresponding to the application A at 8:00 and 14:00 on working days, and automatically unfreeze the processes corresponding to the application A at 12:00 and 18:00 on working days.

According to the method in an embodiment of the present application, the computer device may acquire the freezing moment and unfreezing moment of the process according to the machine decision-making model, and then intelligently freeze and unfreeze the process, thereby improving a freezing rate of background processes and releasing resources occupied by the background processes under a condition of not affecting operation experience of a user.

In one embodiment, the above method further includes following acts.

In operation 308, when it is detected that a background process in a CPU freezing state is a process on which a foreground process depends, waking up the background process in the CPU freezing state, the CPU freezing state refers to a state that prohibiting the background process from using a CPU resource, and the process on which the foreground process depends refers to a background process having a communication mechanism with the foreground process.

Dependency refers to a relationship that successful execution of a process needs data of another process or other multiple processes. When the computer device detects that the background process in the CPU freezing state is a process on which the foreground process depends, indicating that successful execution of the foreground process needs data of the background process. Whether a background process having a communication mechanism with a foreground process exists may be detected by at least one of the following ways.
(1) Detecting whether a background process having socket and/or binder communication with the foreground process exists.
(2) Detecting whether a background process sharing a memory with the foreground process exists.
(3) Detecting whether a background process, on a lock resource, waited by the foreground process exists.

The computer device may traverse background processes to detect whether a background process having socket and/or binder communication with the foreground process exists, and if so, a detected background process is taken as a dependent process. The computer device may also detect whether a background process sharing a memory with the foreground process exists, and if so, a detected background process is also regarded as a dependent process.

The computer device may set a detection mechanism in a binder driver to detect whether binder communication exists between a foreground process and a background process, and call the detection mechanism set in the binder driver to detect a background process that has the binder communication with the foreground process, and take the detected background process as a dependent process.

The computer device may also detect various lock resources including a thread lock, a file handle, a signal, etc. For each lock resource, it may be detected whether lock waiting occurs, that is, lock resource waiting. When it is detected that the lock waiting occurs, whether this waiting behavior occurs on a foreground process may be further detected. If yes, all background processes waiting on the lock resource are traversed, and the detected background processes waiting on the lock resource are all taken as dependent processes.

The computer device may also detect whether a background process having a synchronization mechanism with a foreground process exists in background processes by calling a futex system call, and determine the background process having the synchronization mechanism as a background process that is dependent on the foreground process.

In concurrent programming, access of processes to common variables must be restricted. This restriction is called synchronization. In an operating system, a synchronization mechanism of a user mode may be realized by calling a futex system call. The user mode refers to a non-privileged state. The synchronization mechanism includes semaphores, mutex locks, etc. When it is detected through the futex system call that a background process having any synchronization mechanism with a foreground process exists, the detected background process may be taken as a dependent process.

When the computer device detects that the background process in the CPU freezing state is a process on which the foreground process depends, the computer device may wake up the background process in the CPU freezing state. The CPU freezing state refers to a state in which the background process is prohibited from using a CPU resource. Specifically, when the background process is in a CPU freezing sleep mode and a process deep freezing mode, the background process cannot use a CPU resource, and the background process is in the CPU freezing state. Waking up the background process in the CPU freezing state by the computer device refers to switching the background process from the CPU freezing state to a CPU restriction state, and the CPU restriction state refers to a state that restricts the use of a CPU resource by the background process. For example, when the background process is in a CPU restriction sleep mode, the background process is in the CPU restriction state. The waking up the background process in the CPU freezing state may be switching the background process in the CPU freezing sleep mode to the CPU restriction sleep mode, or switching the background process in the process deep freezing mode to the CPU restriction sleep mode.

According to the method in an embodiment of the present application, the background process in the CPU freezing state may be woken up when detecting that the background process in the CPU freezing state is a process on which the foreground process depends, so as to avoid a situation that the foreground process is executed incorrectly because the background process is in a freezing state and unresponsive.

In one embodiment, the above method further includes following acts.

In operation 310, after waking up the background process, switching the background process to the CPU freezing state when the background process does not enter the foreground within a preset length of time.

After waking up the background process, the computer device may start a timer to detect whether the background process enters the foreground within the preset length of time. When the background process does not enter the foreground within the preset length of time, the computer device determines that the background process has finished processing a message, and switching the background process to the CPU freezing state. The computer device switches the background process to the CPU freezing state, that is, switches the background process to the freezing level before being woken up. When the background process is in the CPU freezing sleep mode before being woken up, the computer device may restore the background process to the CPU freezing sleep mode after the background process is woken up; when the background process is in the process deep freezing mode before being woken up, the computer device may restore the background process to the process deep freezing mode after the background process is woken up.

According to the method in an embodiment of the present application, after the background process is woken up, the background process may be restored to the CPU freezing state after a specified length of time, so that resource restriction on the background process is realized, the background process is prevented from continuously occupying resources after being woken up, and a freezing ratio on the background process is improved.

In one embodiment, the above method further includes: in operation 312, when receiving a termination command for a frozen process, the frozen process is unfrozen, and the unfrozen process is set to a non-freezable state; and in operation 314, the unfrozen process is closed according to the termination command.

The frozen process refers to a process in a CPU freezing state. When the process is in the CPU freezing state, the process occupies hardware resources, processor resources, etc. When resources of the computer device are scare, the computer device will send a termination command to the frozen process to close the frozen process. However, when the process is in the CPU freezing state, the process may not receive any message. Even if the process in the CPU freezing state is woken up, the process will quickly return to the CPU freezing state after being woken up, so the process in the CPU freezing state cannot be closed. In general, the user space will use two sets of codes to terminate the process, one for terminating unfrozen processes and the other for terminating frozen processes.

When the user space receives a termination command for the frozen process, if the frozen process is detected to be in the CPU freezing state, the process in the CPU freezing state is unfrozen, and the unfrozen process is set to a non-freezable state, then the unfrozen process may correctly respond to the received command. The user space then sends a received termination command to the unfrozen process, so that the unfrozen process responds to the termination command correctly, i.e., the unfrozen process is closed.

Accord to the method in one embodiment of the present application, the frozen process may be safely terminated by unfreezing the frozen process firstly and then terminating the frozen process, so that a situation that the process cannot be terminated is avoided; and the user space may terminate frozen processes and unfrozen processes according to a unified termination instruction, so that a compatibility of terminating the frozen processes and terminating the unfrozen processes is realized, difficulty of software development is reduced, and it is convenient for maintenance of the mobile operating system.

In one embodiment, a method for processing information includes following acts.
(1) Acquiring a user group corresponding to a process to be processed, wherein the process to be processed is a process to be frozen or a process to be unfrozen.
(2) According to a mapping relationship of user groups to processes, searching for multiple processes corresponding to the user group.
(3) Freezing or unfreezing the multiple processes corresponding to the user group.

Optionally, before acquiring the user group corresponding to the process to be processed, the method further includes: acquiring a corresponding relationship between the user groups and the processes, and generating the mapping relationship of the user groups to the processes according to the corresponding relationship, the mapping relationship of the user groups to the processes is a one-to-many relationship; when receiving a query request for the mapping relationship of the user groups to the processes, acquiring a query result corresponding to the query request according to the mapping relationship of the user groups to the processes, and returning the query result.

Optionally, freezing the multiple processes corresponding to the user group includes: acquiring lengths of time the multiple processes have entered the background, determining freezing levels for freezing the multiple processes according to the lengths of time, and preforming resource restrictions on the multiple processes according to the freezing levels.

Optionally, freezing or unfreezing the multiple processes corresponding to the user group includes: acquiring a freezing moment and unfreezing moment of a process according to a preset machine learning model; freezing the process according to the freezing moment and unfreezing the process according to the unfreezing moment.

Optionally, the method also includes: waking up the background process in a CPU freezing state when it is detected that background process in the CPU freezing state is a process on which foreground process depends, the CPU freezing state refers to a state in which the background process is prohibited from using a CPU resource, and the process on which the foreground process depends refers to a background process having a communication mechanism with the foreground process.

Optionally, the method also includes: after waking up the background process, when the background process does not enter the foreground within a preset length of time, switching the background process to the CPU freezing state.

Optionally, the method also includes: unfreezing a frozen process when receiving a termination command for the frozen process, and setting the unfrozen process to a non-freezable state; and closing the unfrozen process according to the termination command.

It should be understood that although the operations in the above flowcharts are shown in sequence as indicated by arrows, these operations are not necessarily performed in sequence as indicated by the arrows. Unless explicitly stated herein, the execution of these operations is not strictly limited in sequence, and these steps may be executed in another sequence. Moreover, at least part of the operations may include multiple sub-steps or stages, which may not necessarily be completed at the same time, but may be performed at different times, and the sequence of execution of these sub-steps or stages may not necessarily be performed sequentially, but may be performed alternately with at least part of the sub-steps or stages of other steps or other steps.

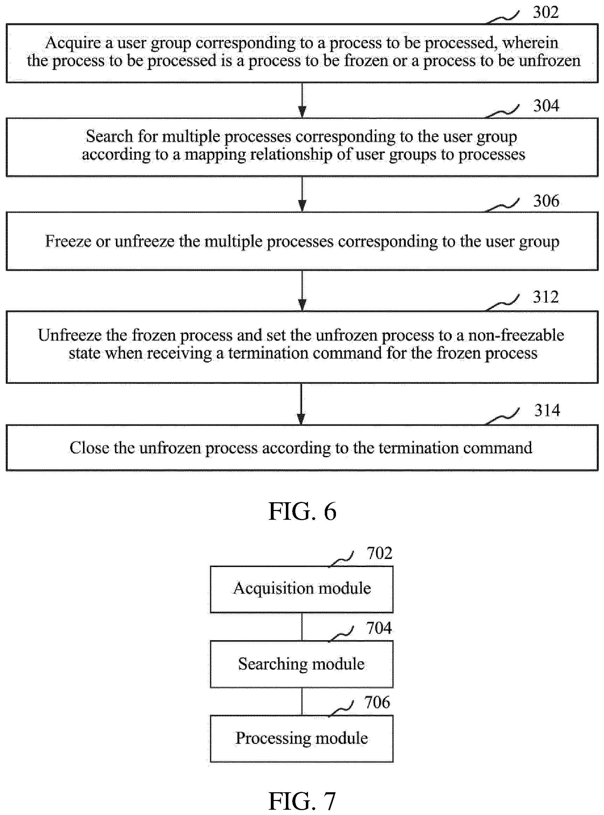

FIG. 7 is a block diagram of an apparatus for processing information in one embodiment. As shown in FIG. 7, the apparatus for processing information includes an acquisition module 702, a searching module 704, and a processing module 706.

The acquisition module 702 is configured to acquire a user group corresponding to a process to be processed, wherein the process to be processed is a process to be frozen or a process to be unfrozen.

The searching module 704 is configured to search for multiple processes corresponding to the user group according to a mapping relationship of user groups to processes.

The processing module 706 is configured to freeze or unfreeze the multiple processes corresponding to the user group.

In one embodiment, the processing module 706 is configured to freeze the multiple processes corresponding to the user group, including: acquire lengths of time the multiple processes have entered the background, determine freezing levels for freezing the multiple processes according to the lengths of time, and restrict resources of the multiple processes according to the freezing levels.

In one embodiment, the processing module 706 is configured to freeze or unfreeze the multiple processes corresponding to the user group, including: acquire a freezing moment and an unfreezing moment of the processes according to a preset machine learning model. A process is frozen according to the freezing moment and the process is unfrozen according to the unfreezing moment.

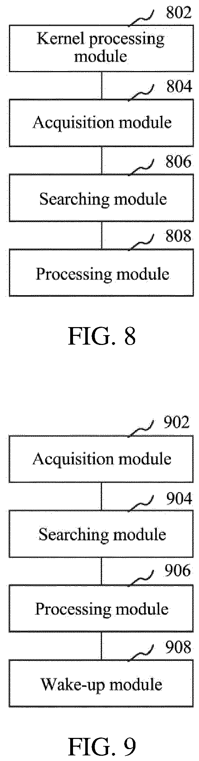

Fig. 8 is a block diagram of an apparatus for processing information in another embodiment. As shown in FIG. 8, the apparatus for processing information includes a kernel processing module 802, an acquisition module 804, a searching module 806, and a processing module 808. The acquisition module 804, the searching module 806 and the processing module 808 have same functions as corresponding modules in FIG. 7.

The kernel processing module 802 is configured to acquire a corresponding relationship between user groups and processes before acquiring the user group corresponding to the process to be processed; generate a mapping relationship of the user groups to the processes according to the corresponding relationship, the mapping relationship of the user groups to the processes is a one-to-many relationship; and acquire a query result corresponding to the query request according to the mapping relationship of the user groups to the processes when receiving a query request for the mapping relationship of the user groups to the processes, and return the query result.

FIG. 9 is a block diagram of an apparatus for processing information in another embodiment. As shown in FIG. 9, the apparatus for processing information includes an acquisition module 902, a searching module 904, a processing module 906, and a wake-up module 908. The acquisition module 902, the searching module 904, and the processing module 906 have same functions as corresponding modules in FIG. 7.

The wake-up module 908 is configured to wake up a background process in a CPU freezing state when it is detected that the background process in the CPU freezing state is a process on which a foreground process depends. The CPU freezing state refers to a state in which the background process is prohibited from using a CPU resource. The process on which the foreground process depends refers to a background process having a communication mechanism with the foreground process.

In one embodiment, the processing module 906 is further configured to, after waking up the background process, when the background process does not enter the foreground within a preset length of time, switch the background process to the CPU freezing state.

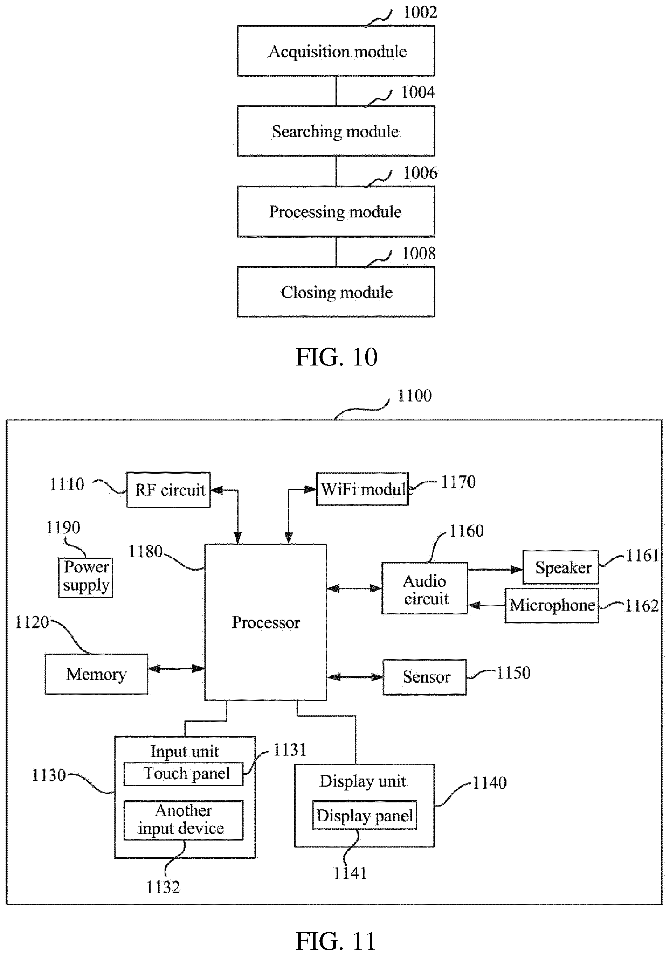

FIG. 10 is a block diagram of an apparatus for processing information in another embodiment. As shown in FIG. 10, the apparatus for processing information includes an acquisition module 1002, a searching module 1004, a processing module 1006, and a closing module 1008. The acquisition module 1002, the searching module 1004, and the processing module 1006 have same functions as corresponding modules in FIG. 7.

The processing module 1006 is configured to unfreeze a frozen process and set the unfrozen process to a non-freezable state when receiving a termination command for the frozen process.

The closing module 1008 is configured to close the unfrozen process according to the termination command.

The division of each module in the apparatus for processing information is only for illustration. In other embodiments, the apparatus for processing information may be divided into different modules as needed to complete all or part of the functions of the apparatus for processing information.

Specific definitions of the apparatus for processing information may refer to the definitions of the method for processing above, which will not be repeated here. Various modules in the apparatus for processing information may be implemented in whole or in part by software, hardware, and combinations thereof. The various modules may be embedded in or independent of the processor in the computer device in the form of hardware, or may be stored in a memory in the computer device in the form of software to facilitate the processor to call and execute the operations corresponding to the various modules.

Various modules in the apparatus for processing information provided in the embodiments of the present application may be implemented in the form of a computer program. The computer program may run on a terminal or a server. Program modules constituted by the computer program may be stored in a memory of the terminal or the server. The computer program, when executed by the processor, implements the steps of the method described in the embodiments of the present application.

An embodiment of the present application further provides a computer-readable storage medium. One or more non-transitory computer readable storage medium contains computer executable instructions which, when executed by one or more processors, enable the processor to perform the operations of the method for processing information in the embodiments of the present application.

An embodiment of the present application also provides a computer program product containing instructions that, when running on a computer, enable the computer to perform the operations of the method for processing information in the embodiments of the present application.

An embodiment of the present application also provides a computer device. As shown in FIG. 11, for ease of explanation, only the part of the electronic device related to the embodiments of the present application is shown, and specific technical details that are not disclosed in this embodiment may refer to the methods in the embodiments of the present application. The computer device may be any terminal device such as a mobile phone, a tablet computer, a Personal Digital Assistant (PDA), a Point of Sales (POS), a vehicle-mounted computer, or a wearable device. A mobile phone is taken as an example of the computer device in following contents.

FIG. 11 shows a block diagram of a partial structure of a mobile phone related to a computer device provided by an embodiment of the present application. Referring to FIG. 11, the mobile phone includes components such as a Radio Frequency (RF) circuit 1110, a memory 1120, an input unit 1130, a display unit 1140, a sensor 1150, an audio circuit 1160, a Wireless Fidelity (WiFi) module 1170, a processor 1180, and a power supply 1190. A person skilled in the art may understand that the structure of the mobile phone shown in FIG. 11 does not constitute a limitation to the mobile phone, and the mobile phone may include more components or fewer components than those shown in the figure, or some components combined, or a different component arrangement.

The RF circuit 1110 may be configured to receive and transmit information, or receive and transmit signals in a call, and receive downlink information from a base station and then send the downlink information to the processor 1180 for processing, and may be configured to transmit uplink data to the base station. Generally, the RF circuit includes, but is not limited to, antennas, at least one amplifier, a transceiver, a coupler, a Low Noise Amplifier (LNA), a duplexer, etc. In addition, the RF circuit 1110 may further communicate with a network and another device via wireless communication. The wireless communication may use any one communication standard or protocol, including but not limited to, a Global System of Mobile communication (GSM), a General Packet Radio Service (GPRS), Code Division Multiple Access (CDMA), Wideband Code Division Multiple Access (WCDMA), Long Term Evolution (LTE), an e-mail, Short Messaging Service (SMS), etc.

The memory 1120 may be configured to store software programs and modules, and the processor 1180 executes the software programs and modules stored in the memory 1120 to perform various functional applications and data processing of the mobile phone. The memory 1120 may mainly include a program storage area and a data storage area. The program storage area may store an operating system, an application program required for at least one function (such as an application program with a sound playing function, an application program with an image playing function, etc.). The data storage area may store data (such as audio data, address book, etc.) created according to the use of the mobile phone. In addition, the memory 1120 may include a high speed random access memory, and may further include a non-transitory memory, such as at least one magnetic disk storage device, a flash memory, or another transitory solid-state storage device.

The input unit 1130 may be configured to receive input digital or character information, and generate key signal inputs related to user settings and function control of the mobile phone 1100. Specifically, the input unit 1130 may include a touch panel 1131 and another input device 1132. The touch panel 1131, also known as a touch screen, may collect user's touch operations on or near the touch panel 1131 (such as user's operations on or near the touch panel 1131 by using any suitable object or accessory such as a finger or stylus), and drive a corresponding connection device according to a preset program. In one embodiment, the touch panel 1131 may include two parts, a touch detection apparatus and a touch controller. The touch detection apparatus detects a touch position of a user, detects a signal brought by a touch operation, and transmits the signal to the touch controller. The touch controller receives touch information from the touch detection apparatus, converts the touch information into contact coordinates and sends to the processor 1180, and may receive and execute commands from the processor 1180. In addition, the touch panel 1131 may be implemented in various types such as resistive, capacitive, infrared, or surface acoustic waves. In addition to the touch panel 1131, the input unit 1130 may also include another input device 1132. In particular, the another input device 1132 may include, but are not limited to, one or more of a physical keyboard, function keys (such as volume control keys, switch keys) or the like.

The display unit 1140 may be configured to display information input by a user or information provided for the user, and various menus of the mobile phone. The display unit 1140 may include a display panel 1141. In one embodiment, the display panel 1141 may be configured in the form of a Liquid Crystal Display (LCD), an Organic Light-Emitting Diode (OLED), etc. In one embodiment, the touch panel 1131 may cover the display panel 1141, and when the touch panel 1131 detects a touch operation on or near it, the touch operation is transmitted to the processor 1180 to determine a type of touch event, and then the processor 1180 provides a corresponding visual output on the display panel 1141 according to the type of touch event. Although in FIG. 11, the touch panel 1131 and the display panel 1141 are two independent components to realize the input and output functions of the mobile phone, in some embodiments, the touch panel 1131 and the display panel 1141 may be integrated to realize the input and output functions of the mobile phone.

The mobile phone 1100 may further include at least one sensor 1150, such as an optical sensor, a motion sensor, or another sensor. Specifically, the optical sensor may include an ambient light sensor and a proximity sensor, wherein the ambient light sensor may adjust luminance of the display screen 1141 according to brightness of ambient light, and the proximity sensor may turn off the display screen 1141 and/or backlight when the mobile phone is moved near an ear. The motion sensor may include an acceleration sensor, an acceleration sensor may be used to detect magnitudes of accelerations in various directions, detect magnitude and direction of gravity when the mobile phone is still, may be used in an application for identifying a gesture of the mobile phone (for example, horizontal and vertical screen switching), and a function related to vibration identification (such as a pedometer and a tap). Other sensors, for example, a gyroscope, a barometer, a hygrometer, a thermometer, and an infrared sensor, which may be configured in the mobile phone are not further described herein.

An audio circuit 1160, a speaker 1161, and a microphone 1162 may provide audio interfaces between the user and the mobile phone. The audio circuit 1160 may convert received audio data into electrical signals, transmits the converted electrical signals to the speaker 1161, and after that the speaker 1161 converts the converted electrical signals into sound signals for playing. On the other hand, the microphone 1162 converts collected sound signals into electrical signals, the electrical signals are received by the audio circuit 1160 and converted into audio data, and after the audio data is processed by the processor 1180, the processed audio data is sent to another mobile phone via the RF circuit 1110, or the processed audio data is output to the memory 1120 for further processing.

WiFi belongs to a short-range wireless transmission technology. The mobile phone may help users to send and receive e-mails, browse web pages, and access streaming media and the like through the WiFi module 1170. The WiFi module 1170 provides users with wireless broadband Internet access. Although FIG. 11 shows the WiFi module 1170, it may be understood that the WiFi module 670 is not necessary configuration of the mobile phone 1100, and may be omitted as needed.

The processor 1180 is a control center of the mobile phone, and connects various parts of the whole mobile phone by using various interfaces and circuits. By running or executing software programs and/or modules stored in the memory 1120 and invoking data stored in the memory 1120, the processor 1180 performs various functions of the mobile phone and processes data, thereby performing overall monitoring on the mobile phone. In one embodiment, the processor 1180 may include one or more processing units. In one embodiment, the processor 1180 may integrate an application processor and a modem processor. The application processor mainly processes an operating system, a user interface, an application program, and the like. The modem processor mainly handles wireless communication. It may be understood that, the foregoing modem processor may be not integrated into the processor 1180.

The mobile phone 1100 further includes the power supply 1190 (such as a battery) for supplying power for various parts. Preferably, the power supply may be logically connected with the processor 1180 by using a power management system, thereby implementing management functions on charging, discharging, and power consumption management, etc. through the power management system.

In one embodiment, the mobile phone 1100 may also include a camera, a Bluetooth module, etc.

In the embodiment of the present application, the processor 1180 included in the computer device performs the operations of the method for processing information when executing the computer program stored in the memory.

Any reference to a memory, a storage, a database, or another medium used in the present application may include a non-transitory and/or a transitory memory. The non-transitory memory may include a Read Only Memory (ROM), a Programmable ROM (PROM), an Electrically Programmable ROM (EPROM), an Electrically Erasable Programmable ROM (EEPROM), or a flash memory. The transitory memory may include a Random Access Memory (RAM), which is served as an external cache memory. By way of illustration and not limitation, a RAM is available in various forms, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), a Memory Bus (Rambus) Direct RAM (RDRAM), a Direct Memory Bus Dynamic RAM (DRDRAM), and a Memory Bus Dynamic RAM (RDRAM).

The embodiments described above only provide several implementations of the present application, and their descriptions are relatively specific and detailed, but they are not to be construed as limiting the protection scope of the present application. It should be noted that for those of ordinary skill in the art, variations and improvements may be made without departing from the concept of the present application, which fall within the protection scope of the present application. The protection scope of the present application is defined by the appended claims.

## Claims

1. A method for processing information, comprising:
acquiring a user group corresponding to a process to be processed, wherein the process to be processed is a process to be frozen or a process to be unfrozen;
searching for multiple processes corresponding to the user group according to a mapping relationship of user groups to processes; and
freezing or unfreezing the multiple processes corresponding to the user group.

2. The method of claim 1, wherein before acquiring the user group corresponding to the process to be processed, the method further comprises:
acquiring a corresponding relationship between the user groups and the processes, and generating the mapping relationship of the user groups to the processes according to the corresponding relationship; wherein, the mapping relationship of the user groups to the processes is a one-to-many relationship; and
acquiring a query result corresponding to a query request according to the mapping relationship of the user groups to the processes when receiving the query request for the mapping relationship of the user groups to the processes, and returning the query result.

3. The method of claim 1, wherein freezing the multiple processes corresponding to the user group comprises:
acquiring lengths of time the multiple processes have entered background, determining freezing levels for freezing the multiple processes according to the lengths of time, and preforming resource restrictions on the multiple processes according to the freezing levels.

4. The method of claim 1, wherein freezing or unfreezing the multiple processes corresponding to the user group comprises:
acquiring a freezing moment and an unfreezing moment of a process according to a preset machine learning model; and
freezing the process according to the freezing moment and unfreezing the process according to the unfreezing moment.

5. The method of any one of claims 1, 3, and 4, further comprising:
waking up a background process in a Central Processing Unit (CPU) freezing state when it is detected that the background process in the CPU freezing state is a process on which a foreground process depends, wherein, the CPU freezing state refers to a state in which the background process is prohibited from using a CPU resource, and the process on which the foreground process depends refers to a background process having a communication mechanism with the foreground process.

6. The method of claim 5, further comprising:
after waking up the background process, when the background process does not enter foreground within a preset length of time, switching the background process to the CPU freezing state.

7. The method of any one of claims 1, 3, and 4, further comprising:
when receiving a termination command for a frozen process, unfreezing the frozen process and setting the unfrozen process to a non-freezable state; and
closing the unfrozen process according to the termination command.

8. An apparatus for processing information, comprising:
an acquisition module, configured to acquire a user group corresponding to a process to be processed, wherein the process to be processed is a process to be frozen or a process to be unfrozen;
a searching module, configured to search for multiple processes corresponding to the user group according to a mapping relationship of user groups to processes; and
a processing module, configured to freeze or unfreeze the multiple processes corresponding to the user group.

9. A computer device comprising a memory and a processor, wherein a computer program is stored in the memory, and when executed by the processor, the computer program enables the processor to perform the operations of the method according to any one of claims 1 to 7.

10. A computer readable storage medium having a computer program stored thereon, wherein when executed by a processor, the computer program implements the operations of the method according to any one of claims 1 to 7.
